# EUROPÄISCHE PATENTSCHRIFT

(11) **EP 1 258 402 B1**
(45) Veröffentlichungstag und Bekanntmachung des Hinweises auf die Patenterteilung: **14.12.2005**
(21) Anmeldenummer: 02010267.9
(22) Anmeldetag: 17.05.2002
(51) Int. Cl.: B60R 21/34

(54) **Antrieb für Fahrzeughaube**
Actuator for a vehicle hood
Actionneur pour capot de véhicule

(30) Priorität: 17.05.2001 DE 20108338 U
(43) Veröffentlichungstag der Anmeldung: 20.11.2002
(73) Patentinhaber: TRW Automotive Electronics & Components GmbH & Co. KG, 78315 Radolfzell (DE)
(72) Erfinder: Peter, Cornelius, 77815 Bühl (DE)
(74) Vertreter: Kitzhofer, Thomas

(56) Entgegenhaltungen:
- EP-A- 1 179 458
- DE-A- 19 710 417
- PATENT ABSTRACTS OF JAPAN vol. 1999, no. 09, 30. Juli 1999 (1999-07-30) & JP 11 115680 A (NISSAN MOTOR CO LTD), 27. April 1999 (1999-04-27)
- PATENT ABSTRACTS OF JAPAN vol. 1999, no. 14, 22. Dezember 1999 (1999-12-22) & JP 11 263191 A (NISSAN MOTOR CO LTD), 28. September 1999 (1999-09-28)

## Beschreibung

Die Erfindung betrifft einen Antrieb für eine Fahrzeughaube nach dem Oberbegriff des Anspruchs 1.

Ein Fußgänger kann bei einer Kollision mit einem Pkw vor Verletzungen geschützt werden, indem die Motorhaube angehoben wird, was deren Deformationsweg erhöht.

Es ist wünschenswert, daß ein derartiges Anheben der Motorhaube sehr schnell und, falls doch keine Kollision erfolgt, ohne Austausch von Bauteilen wiederholt durchführbar ist und auch, daß die Motorhaube einfach wieder in ihre Schließstellung überführbar ist.

Die gattungsgemäße DE-A 197 10 417 nach dem Oberbegriff des Anspruch 1 zeigt eine aufstellbare Motorhaube, die durch einen Antrieb aus einer geschlossenen Stellung in eine angehobene Stellung gebracht werden kann, um den Aufprall eines Fußgängers anzudämpfen. Der Antrieb kann ein elektrischer Antrieb sein.

In der nachveröffentlichten EP-A 1 179 458 ist eine anhebbare Motorhaube beschrieben, bei der ein durch einen Elektromotor vorgespannter Federantrieb die Motorhaube nach oben bewegt.

Die Erfindung schafft einen Antrieb für eine Fahrzeughaube, der auf einfache Weise ein sehr schnelles Anheben der Haube sowie ein einfaches Zurückführen in deren Schließstellung erlaubt. Dies wird bei einem gattungsgemäßen Antrieb durch die Merkmale des Anspruchs 1 erreicht.

Die Bereitstellung der Hubenergie durch einen Elektromotors erlaubt es, auf Einwegbauteile wie z.B. pyrotechnische Bauteile zu verzichten. Außerdem ist es mit einem Elektromotor möglich, die Bewegung der Haube sehr genau vorherzubestimmen, so daß ein Schwingen der Motorhaube bei Erreichen der angehobenen Position weitgehend unterbunden werden kann. Weitere vorteilhafte Merkmale der Erfindung sind in den Unteransprüchen beschrieben.

Die Kraft zum Öffnen der Haube wird bevorzugt allein vom Elektromotor zur Verfügung gestellt. Der Antriebsmotor bewirkt bevorzugt in einer Doppelfunktion die Freigabe der Laufsperre, so daß die Haube angehoben werden kann, sowie das Bewegen der Haube in die angehobenen Stellung. Auch das Zurückbewegen der Haube in die Schließstellung kann durch den Motor bewirkt werden. Optional kann ein zusätzlicher Kraftspeicher vorgesehen sein, der im Anfangsstadium die Hubbewegung unterstützt. In diesem Fall arbeitet der Antriebsmotor vorteilhaft gegen den Kraftspeicher, wenn die Haube zurück in ihre Schließstellung bewegt wird, so daß diesem die Energie zum erneuten Anheben der Haube wieder zuführt wird.

Bei der Haube kann es sich wie im eingangs verwendeten Beispiel bevorzugt um eine Motorhaube handeln, die Erfindung ist aber auch auf andere Hauben im Fahrzeug wie Kofferraumklappe etc. übertragbar.

Weitere Merkmale und Vorteile gehen auch aus der nachfolgenden Beschreibung eines Ausführungsbeispiels in Verbindung mit den beigefügten Zeichnungen hervor. In den Zeichnungen zeigen:
- Figur 1 eine schematische Ansicht einer Fahrzeughaube mit einem erfindungsgemäßen Antrieb und einem Kraftspeicher in einer Schließstellung der Haube;
- Figur 2 die Haube aus Figur 1 in einer angehobenen Stellung;
- Figur 3 die Haube aus Figur 1 in einer Wartungs- oder Endstellung;

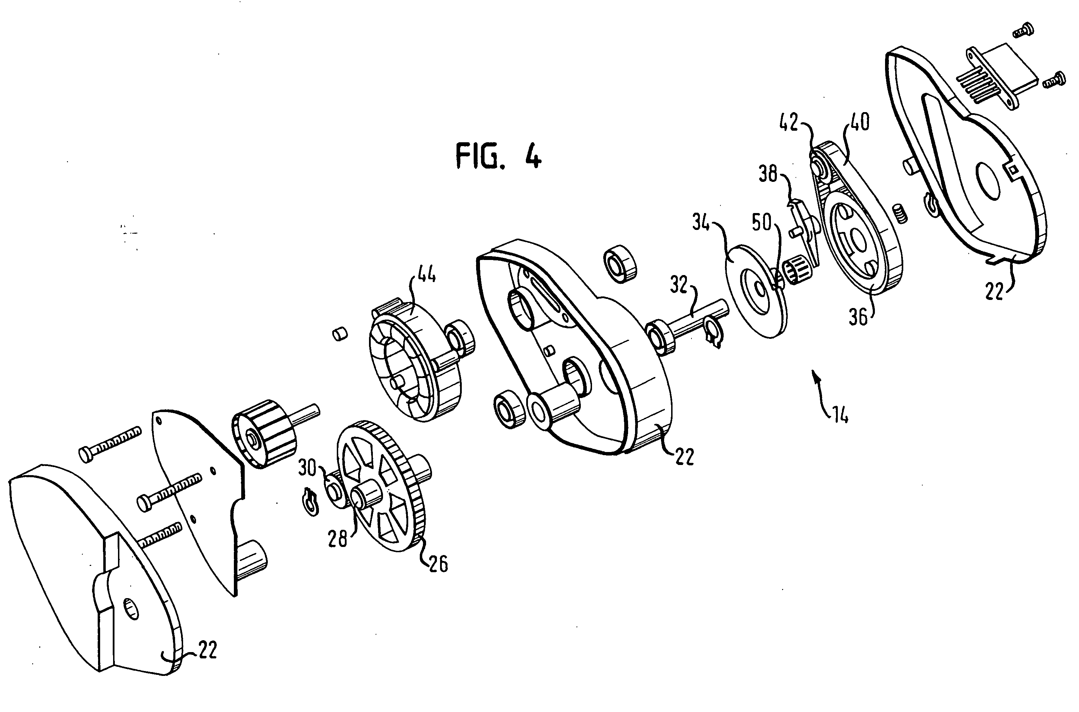

- Figur 4 eine teilweise Explosionsansicht einer erfindungsgemäßen Antriebseinheit;

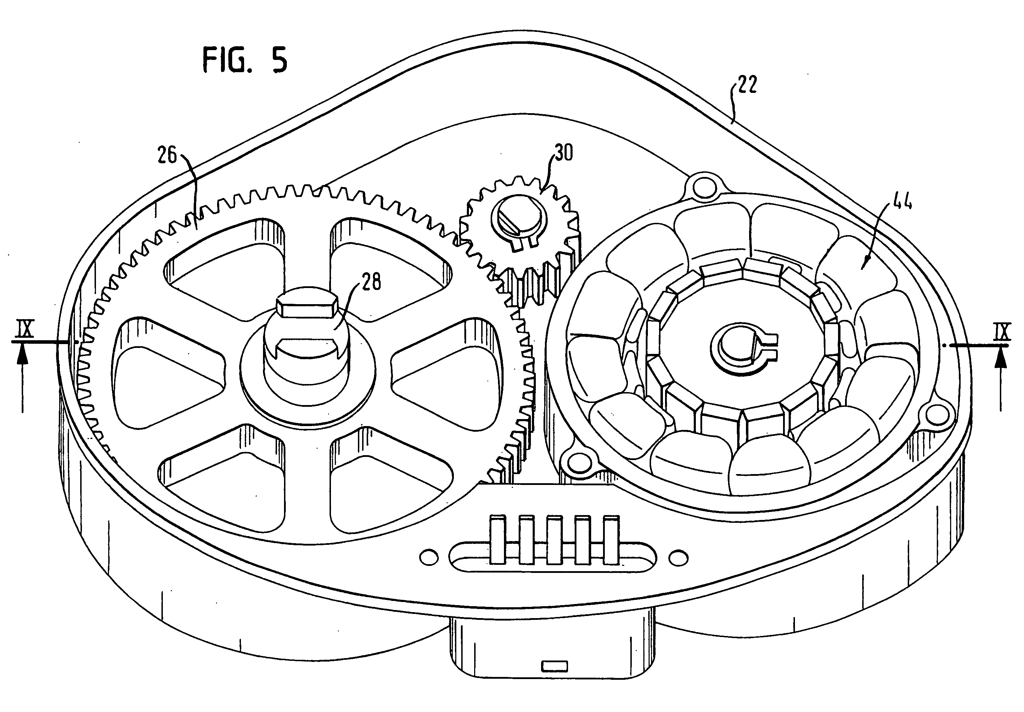

- Figur 5 eine schematische perspektivische Teilansicht einer bei der Erfindung eingesetzten Antriebseinheit von einer ersten Seite;

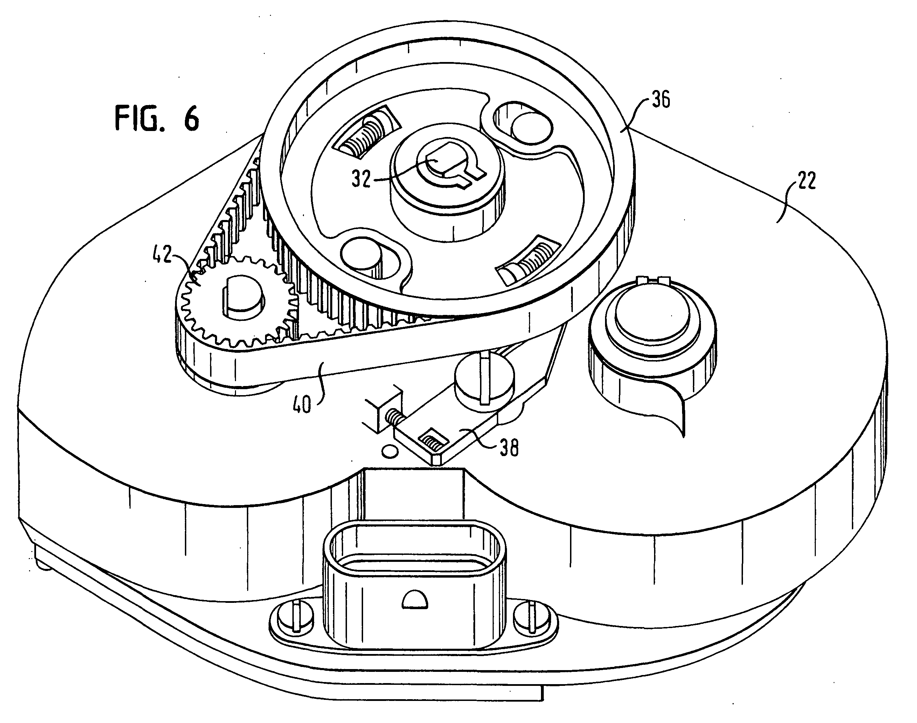

- Figur 6 die Antriebseinheit aus Figur 5 von einer gegenüberliegenden Seite;
- Figur 7 eine schematische teilweise Explosionsansicht einer bei der Erfindung eingesetzten Antriebseinheit;
- Figur 8 eine schematische perspektivische Teilansicht der Antriebseinheit aus Figur 5;
- Figur 9 einen Schnitt entlang der Linie IX-IX aus Figur 5;
- Figur 10 - Figur 13 schematische Darstellungen der Antriebseinheit zu verschiedenen Zeitpunkten beim Lösen der Laufsperre;
- Figur 14 ein Diagramm der Bewegung der Haube über die Zeit bezogen auf den Drehwinkel des Motors; und
- Figur 15 ein Diagramm der Drehgeschwindigkeit des Motors über die Zeit während der Bewegung der Haube in die angehobene Stellung.

Eine Haube 10 eines Fahrzeugs, im hier beschriebenen Beispiel eine Motorhaube, ist mit einer als geschlossene Baugruppe ausgebildeten Antriebseinheit 14 verbunden.

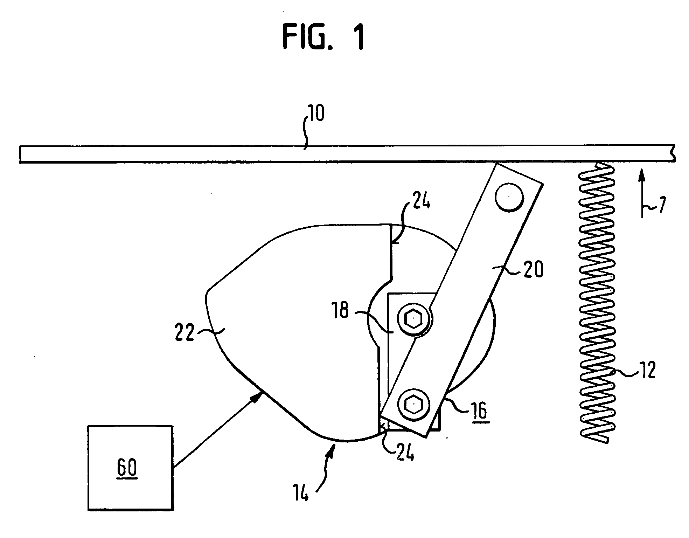

Die Antriebseinheit 14 verfügt über einen Kurbeltrieb 16 mit einem ersten Arm 18 und einem zweiten Arm 20, wobei das freie Ende des zweiten Arms 20 mit der Unterseite der Haube 10 verbunden ist. In der Schließstellung (Fig. 1) ist das mit dem zweiten Arm verbundene Ende des ersten Arms von der Haube weg gerichtet.

Optional ist zusätzlich zur Antriebseinheit 14 ein separater Kraftspeicher 12 (hier eine Druckfeder in Form einer Spiralfeder) vorgesehen, der ebenfalls, aber entfernt von der Antriebseinheit 14, an der Haube angreift und diese in der Schließstellung in Hubrichtung beaufschlagt. Der Kraftspeicher 12 hat seine maximale Energie in der Schließstellung, d.h. hier ist die Feder gespannt.

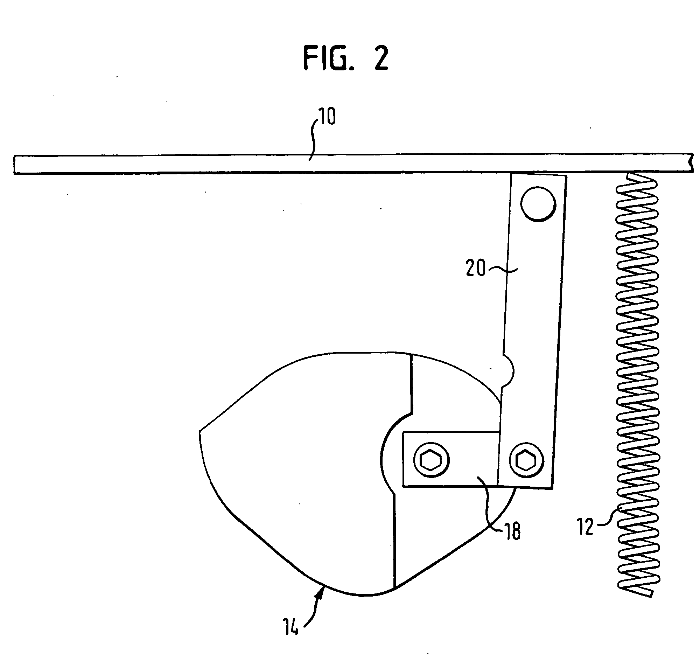

Bei einer Kollision, z.B. mit einem Fußgänger, wird die Haube 10 in eine angehobene Stellung verfahren (Figur 2). Die Energie hierzu wird hauptsächlich von einem Elektromotor 44 geliefert, der Teil der Antriebseinheit 14 ist. Die Antriebseinheit 14 wird im folgenden noch genauer beschrieben. Der Kraftspeicher 12 unterstützt die Hubbewegung lediglich in der Anfangsphase der Bewegung der Haube, wobei sich die Feder um einen gewissen Betrag entspannt. In der angehobenen Stellung ist der erste Arm 18 des Kurbeltriebs 90° (hier im Gegenuhrzeigersinn) gegenüber seiner Stellung in Schließstellung gedreht. Die Haube 10 ist nun gegenüber der Schließstellung angehoben. Das Anheben der Haube 10 erfolgt so schnell, daß z.B. ein Fußgänger, der von dem Pkw erfaßt wird, auf die bereits angehobenen Haube auftrifft. Die Antriebseinheit 14 und die Haube 10 sind so ausgelegt, daß die Haube 10 verformt werden kann, um die Energie eines Fußgängers aufzunehmen. Erfolgt keine Kollision, kann die Haube 10 durch die Antriebseinheit 14 wieder in die Schließstellung überführt werden.

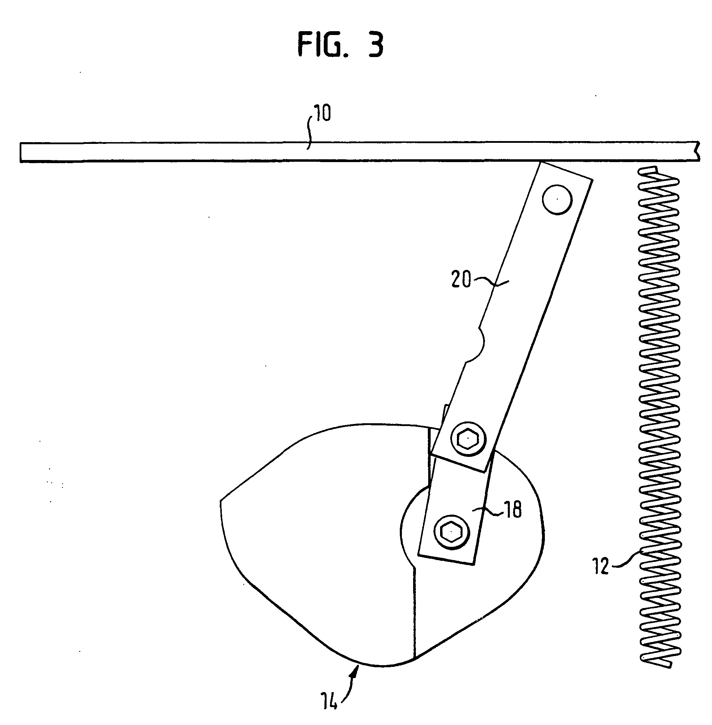

Die Antriebseinheit 14 kann auch dazu eingesetzt werden, die Haube 10 über die angehobenen Stellung hinaus in eine Wartungsstellung anzuheben, die in Figur 3 gezeigt ist. In einer Ausführungsform der Erfindung ist diese Stellung die Endstellung nach dem Anheben der Haube und entspricht der angehobenen Stellung. Der Kurbeltrieb wird so weit bewegt, bis das mit dem zweiten Arm 20 verbundenen Ende des ersten Arms 18 gegenüber seiner Position in der Schließstellung um ca. 180° gedreht ist und der Kurbeltrieb in eine Totpunktstellung gelangt.

Die Antriebseinheit 14 hat ein Gehäuse 22, an dessen Außenseite der Kurbeltrieb 16 montiert ist. Am Gehäuse 22 sind Anschläge 24 für den ersten Arm 18 vorgesehen.

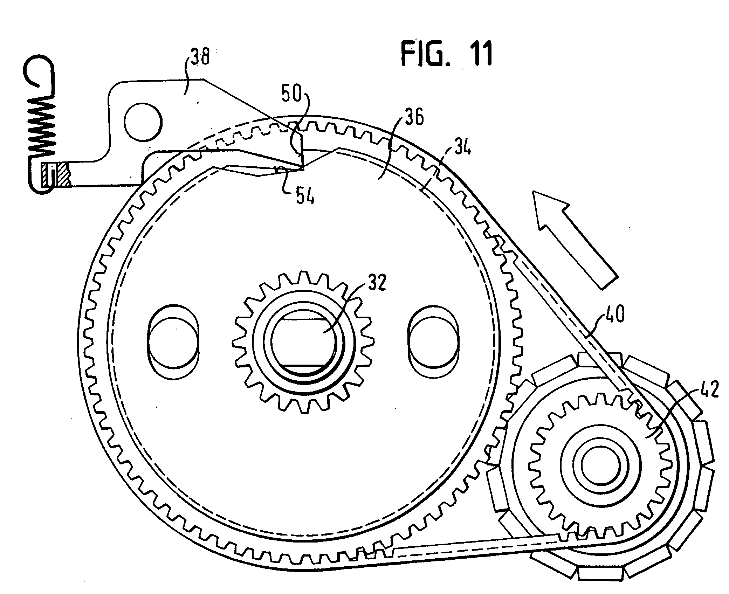

Innerhalb des Gehäuses 22 ist ein erstes Zahnrad 26 angeordnet, das über eine Welle 28 drehfest mit dem Kurbeltrieb 16 verbunden ist. Dieses Zahnrad 26 kämmt mit einem zweiten Zahnrad 30, welches über eine Welle 32 mit einer ersten Sperrscheibe 34 verbunden ist. Drehbar auf der Welle 32 sitzt eine zweite Sperrscheibe 36. An der ersten Sperrscheibe 34 ist in der Schließstellung der Haube 10 eine Sperrklinke 38 in Anlage (siehe Anschlag 50 in Figur 11), so daß die Welle 32 in einer Richtung an der Drehung gehindert ist. Die Sperrklinke 38 ist schwenkbar am Gehäuse gelagert und über eine Rückstellfeder in Richtung zur ersten Sperrscheibe 34 beaufschlagt. Über einen an der Sperrscheibe 36 angelegten Zahnriemen 40 und ein drittes Zahnrad 42 kann die als Zahnrad ausgeführte zweite Sperrscheibe 36 von dem elektrischen Antriebsmotor 44 angetrieben werden. Der Antriebsmotor 44 ist ein bekannter hochdrehender, bürstenloser, trägheitsarmer Gleichstrom-Servo-Motor. Der Rotor des Motors 44 ist glockenförmig gestaltet, um das Trägheitsmoment weiter zu verringern. Der Motor 44 ist so ausgelegt, daß er die Energie liefern kann, um eine 20 kg schwere Motorhaube innerhalb von ca. 60 ms über eine Hubstrecke von ca. 60 mm anzuheben.

Die Zahnräder 42, 36, 30 und 26 sind Bestandteil eines zweistufigen Untersetzungsgetriebes.

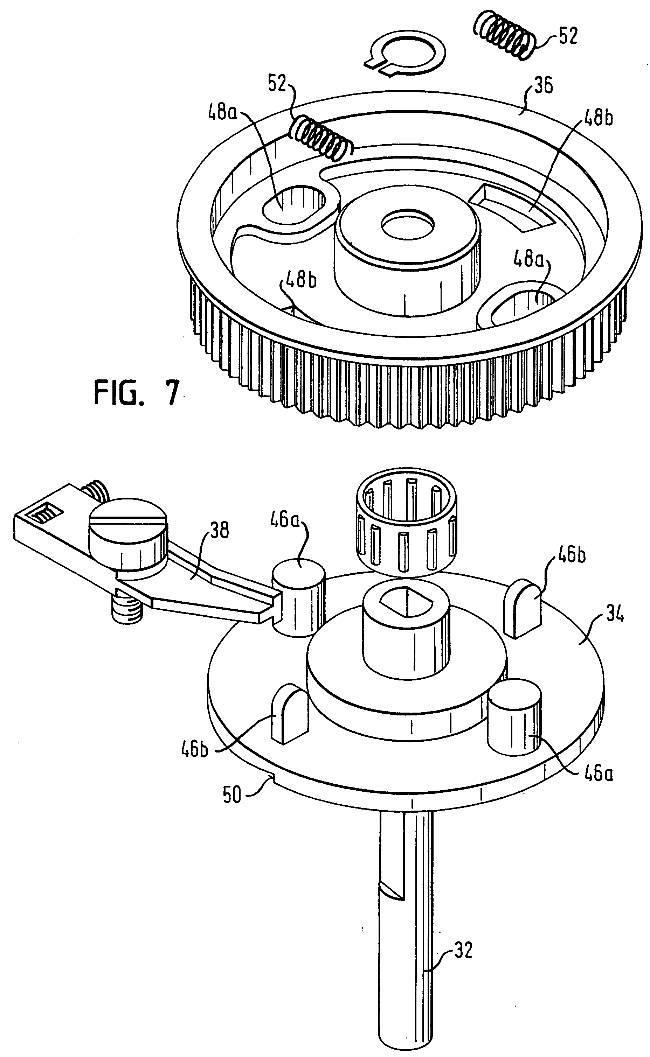

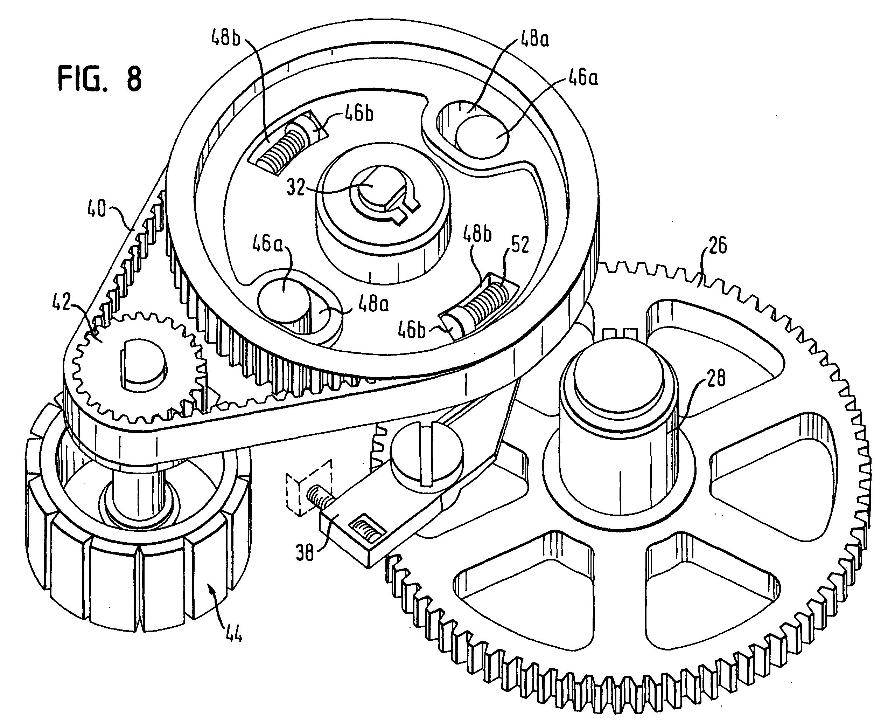

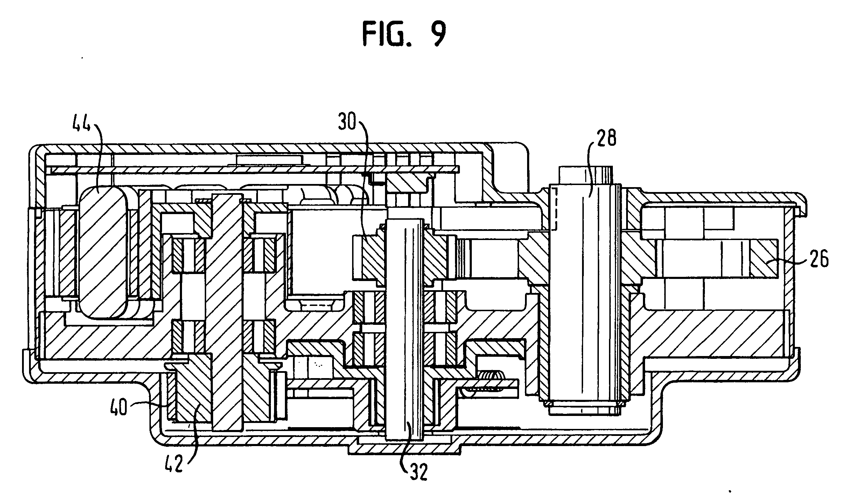

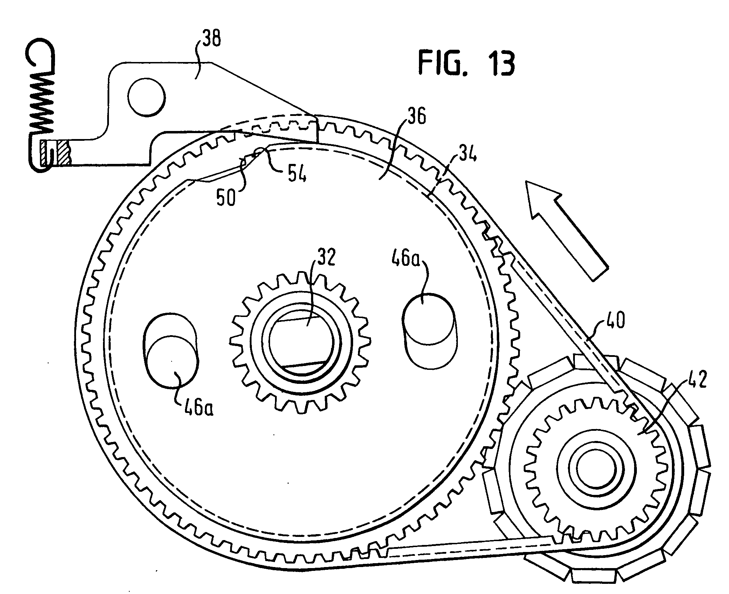

Die Sperrklinke 38 bildet zusammen mit den beiden Sperrscheiben 34, 36 eine Laufsperre, die in der Schließstellung eine Drehung des ersten Zahnrads 26 und damit des Kurbeltriebs 16 blockiert. Da die Haube 10 mit dem zweiten Arm 20 verbunden ist, ist in dieser Stellung ein Anheben der Haube 10 z.B. durch den Kraftspeicher verhindert. Die Laufsperre sowie deren Entriegelung (siehe auch Figuren 7-13) werden im folgenden detailliert beschrieben.

Die erste Sperrscheibe 34 weist vier Vorsprünge 46a, 46b auf, die in entsprechende Öffnungen 48a, 48b in der zweiten Sperrscheibe 36 ragen. Zwischen den Vorsprüngen 46b und dem Rand der Öffnungen 48b sind Spiralfedern 52 angeordnet. Die Vorsprünge 46a, 46b haben in den Öffnungen 48a, 48b ein gewisses Spiel, so daß die zweite Sperrscheibe 36 gegenüber der ersten Sperrscheibe 34 um einen gewissen Winkel gegen die Rückstellkraft der Federn 52 verdrehbar ist. Nur die erste Sperrscheibe 34 ist drehfest mit der Welle 32 verbunden.

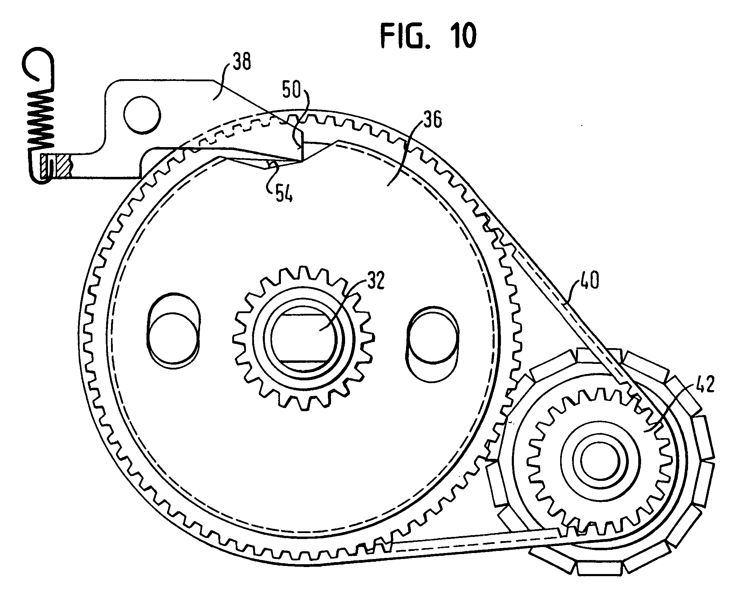

Die erste Sperrscheibe 34 weist an ihrem Außenrand einen Anschlag 50 auf, an dem die Sperrklinke 38 in der Schließstellung in Anlage ist (Figur 10). Die zweite Sperrscheibe 36 hat im Bereich der Anlagefläche der Sperrklinke 38 eine Rampe 54.

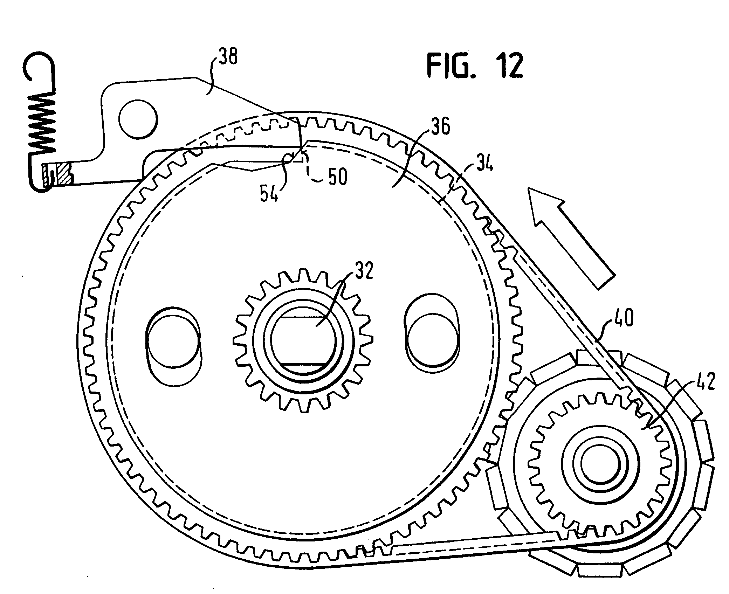

Wenn der extrem schnell hochdrehende Motor 44 läuft, wird Kraft über den Zahnriemen 40 auf die zweite Sperrscheibe 36 übertragen, und die zweite Sperrscheibe 36 wird gegenüber der ersten Sperrscheibe 34 geringfügig verdreht (Pfeil in Figuren 11 und 12), da die erste Sperrscheibe 34 von der Sperrklinke 38 zurückgehalten wird. Durch die Drehung der zweiten Sperrscheibe 36 bewegt sich die Rampe 54 gegenüber der Sperrklinke 38, so daß die Sperrklinke 38 vom Anschlag 50 der ersten Sperrscheibe 34 abgehoben wird (Figur 12). Jetzt ist die Laufsperre gelöst, die Vorsprünge 46b liegen an Umfangswandungsabschnitten der Öffnungen 48b an, so daß die Sperrscheibe 36 die Sperrscheibe 34 antreibt (Figur 12). Es ist kein externes Mittel zum Lösen der Sperrklinke 38 vorgesehen.

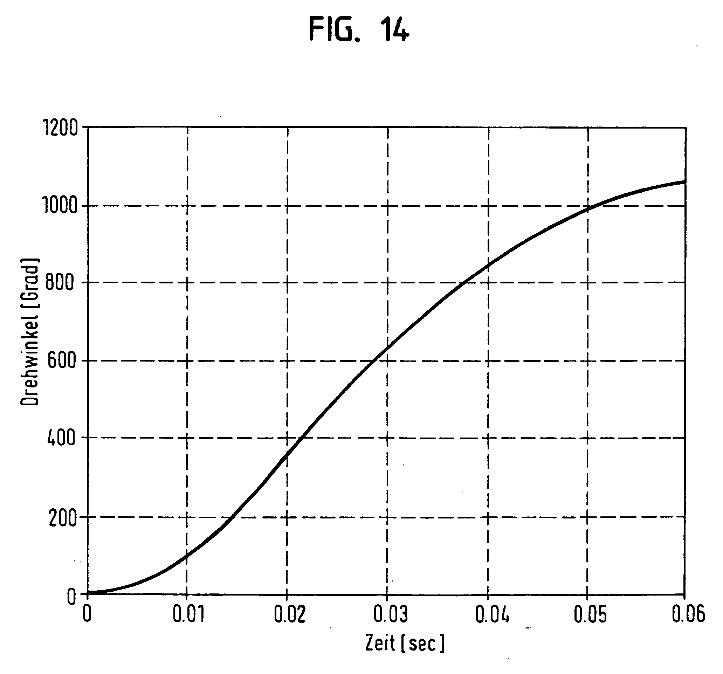

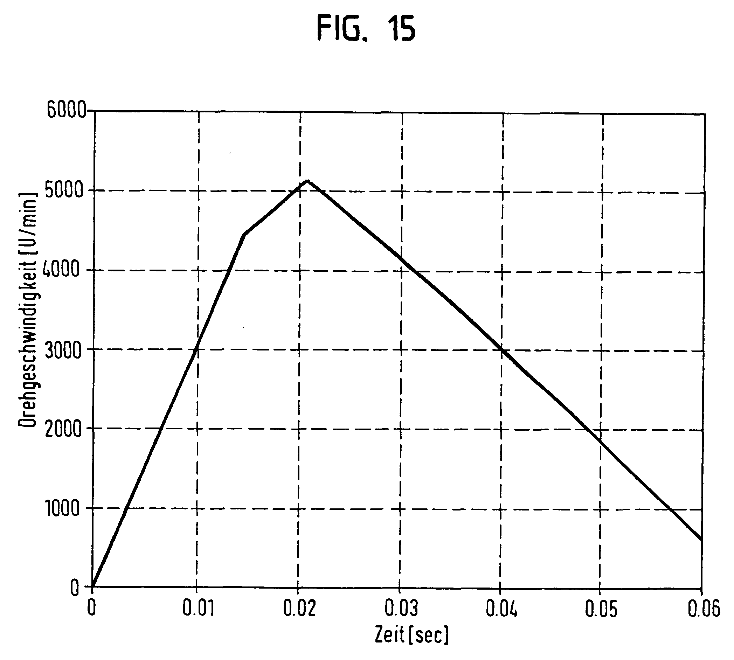

Eine programmierbare elektronische Ansteuereinheit 60 (Fig. 1), die mit einem nicht gezeigten Aufprallsensor in Verbindung steht, schaltet den Motor auf ein Signal des Sensors hin ein. Der Motor 44 beschleunigt dann sehr schnell und hebt die Haube 10 in Hubrichtung an und beschleunigt diese (Fig. 15). Die Trägheit von Motor 44 und Antriebseinheit 14 ist im Vergleich mit der Trägheit der Hube 10 vernachlässigbar. Nachdem der Motor 44 die Haube 10 beschleunigt hat, wird der Motor 44 von der Ansteuereinheit so gesteuert, daß die Haube auf dem letzten Stück des Hubwegs abgebremst wird (S-förmiger Kurvenverlauf). Die Haube erreicht so die angehobene Stellung mit einer relativ geringen Geschwindigkeit, so daß die Bewegung sanft zum Stillstand kommt. Hierdurch wird vermieden, daß die Haube in Schwingung gerät. Die Bewegung der Haube ist in Figur 14 dargestellt. Während des letzten Abschnitts der Bewegung wirkt der Motor 44 effektiv als Bremse, wobei die Ansteuereinheit 60 so programmiert ist, daß eine Steuerung der Bewegung erfolgt, sobald die anfängliche Beschleunigung der Haube beendet ist.

In der angehobenen Stellung ist eine Abwärtsbewegung der Haube 10 vorzugsweise durch den Kurbeltrieb 16 blockiert. Dieser kann auf bekannte Weise mit einem Rastmechanismus versehen sein (nicht gezeigt), der durch einen Überhub des Kurbeltriebs gelöst werden kann. Es ist auch möglich, die Haube 10 so weit anzuheben, daß die angehobene Stellung mit einer Totpunktstellung des Kurbeltriebs 16 zusammenfällt (Fig. 3).

Zum Überführen der Haube 10 aus der angehobenen Stellung zurück in die Schließstellung wird der Motor 44 in entgegengesetzter Drehrichtung betrieben. Die Motorkraft wird über das Getriebe und den Kurbeltrieb 16 auf die Haube 10 übertragen, und diese wird gegen die Kraft des Kraftspeichers 12 in ihre Schließstellung zurückbewegt. Dabei wird dem Kraftspeicher 12 wieder Energie zugeführt. Wenn die Haube 10 wieder in der Schließstellung ist, gelangt die Sperrklinke 38 wieder in Anlage mit dem Anschlag 50, und der Motor 44 wird abgeschaltet. Solange vom Motor 44 keine Drehung der zweiten Sperrscheibe 36 bewirkt wird, bleibt die Sperrklinke 38 in Anlage am Anschlag 50, und die Haube 10 verbleibt in ihrer Schließstellung.

Um die Haube 10 über die angehobene Stellung hinaus in die Wartungsstellung anzuheben, wird der Motor 44 im gleichen Drehsinn wie zum Lösen der Laufsperre betrieben, wenn sich die Haube 10 in der angehobenen Stellung befindet. Der Kurbeltrieb 16 kann so weit ausgefahren werden, bis der erste Arm 18 an seinem Gehäuseanschlag 24 anliegt. Wenn diese Stellung die Endstellung der Hubbewegung der Haube in die angehobenen Stellung ist, bewegt der Motor 44 den Kurbeltrieb 16, bis die Totpunktstellung erreicht ist.

## Patentansprüche

1. Antrieb für eine zwischen einer Schließstellung und einer angehobenen Stellung bewegbaren Haube (10), insbesondere einer Motorhaube, an einem Fahrzeug, mit einer zwischen Fahrzeugaufbau und Haube wirksamen Antriebseinheit (14), die einen elektrischen Antriebsmotor (44) aufweist, der die Haube (10) bei einem Unfall abrupt in die angehobene Stellung bewegt,
**dadurch gekennzeichnet, daß** die Antriebseinheit (14) eine im Kraftflußweg zwischen Antriebsmotor (44) und Haube (10) liegende Laufsperre aufweist.

2. Antrieb nach Anspruch 1, **dadurch gekennzeichnet, daß** die Antriebseinheit (14) so ausgelegt ist, daß die Haube (10) in der Schließstellung verbleibt, solange die Laufsperre wirkt.

3. Antrieb nach einem der Ansprüche 1 und 2, **dadurch gekennzeichnet, daß** die Laufsperre durch eine durch den Antriebsmotor (44) hervorgerufene Drehung gelöst wird.

4. Antrieb nach Anspruch 3, **dadurch gekennzeichnet, daß** der Antriebsmotor (44) zu Beginn seiner Antriebsbewegung zuerst die Laufsperre löst und anschließend die Haube (10) bewegt.

5. Antrieb nach einem der vorhergehenden Ansprüche, **dadurch gekennzeichnet, daß** die Laufsperre eine Sperrklinke (38) enthält.

6. Antrieb nach Anspruch 5, **dadurch gekennzeichnet, daß** die Laufsperre eine erste und eine zweite Sperrscheibe (34, 36) enthält, die miteinander gekoppelt und um einen vorbestimmten Winkel gegen eine Rückstellkraft gegeneinander verdrehbar sind.

7. Antrieb nach Anspruch 6, **dadurch gekennzeichnet, daß** die erste Sperrscheibe (34) einen Anschlag (50) aufweist, an der die Sperrklinke (38) anliegt, wenn die Laufsperre aktiv ist.

8. Antrieb nach Anspruch 7, **dadurch gekennzeichnet, daß** die zweite Sperrscheibe (36) eine Rampe (54) aufweist, die so mit der Sperrklinke (38) zusammenwirkt, daß die Sperrklinke (38) aus dem Anschlag (50) an der ersten Sperrscheibe (34) gelöst wird, wenn die Sperrscheiben gegeneinander verdreht werden.

9. Antrieb nach Anspruch 8, **dadurch gekennzeichnet, daß** die zweite Sperrscheibe (36) über den Antriebsmotor (44) gedreht werden kann.

10. Antrieb nach einem der vorhergehenden Ansprüche, **dadurch gekennzeichnet, daß** der Antrieb einen Kraftspeicher (12) aufweist, der die Haube (10) in Schließstellung in Hubrichtung beaufschlagt und der ein von der Antriebseinheit (14) getrenntes Bauteil ist.

11. Antrieb nach Anspruch 10, **dadurch gekennzeichnet, daß** in der Schließstellung die Laufsperre (34, 36, 38) dem Kraftspeicher (12) entgegenwirkt.

12. Antrieb nach Anspruch 10 oder 11, **dadurch gekennzeichnet, daß** der Antriebsmotor (44) die Haube (10) von der angehobenen in die Schließstellung bewegen kann und wobei der Antriebsmotor (44) bei dieser Bewegung dem Kraftspeicher (12) entgegenwirkt.

13. Antrieb nach einem der vorhergehenden Ansprüche, wobei die Haube (10) durch die Antriebseinheit (14) in eine Stellung angehoben werden kann, in der sie weiter angehoben ist als in der angehobenen Stellung.

14. Antrieb nach einem der vorhergehenden Ansprüche, wobei der Antriebsmotor (44) mit einem Untersetzungsgetriebe gekoppelt ist und mit diesem die Antriebseinheit (14) bildet.

15. Antrieb nach Anspruch 14, **dadurch gekennzeichnet, daß** ein Kurbeltrieb (16) vorgesehen ist, dessen Ausgang (20) an die Haube (10) und dessen Eingang (18) über das Untersetzungsgetriebe an den Antriebsmotor (44) gekoppelt ist.

16. Antrieb nach Anspruch 15, **dadurch gekennzeichnet, daß** ein Kurbelarm (18, 20) des Kurbeltriebs (16) in eine einer Wartungsstellung entsprechende dritte Drehstellung verschwenkbar ist, wobei der Schwenkwinkel zwischen der ersten und der dritten Drehstellung etwa 180° beträgt.

17. Antrieb nach einem der Ansprüche 14 bis 16, **dadurch gekennzeichnet, daß** das Untersetzungsgetriebe mehrstufig ausgebildet ist und wobei die Laufsperre (34, 36, 38) zwischen zwei Stufen des Untersetzungsgetriebes angreift.

18. Antrieb nach einem der vorhergehenden Ansprüche, **dadurch gekennzeichnet, daß** der Antriebsmotor (44) ein bürstenloser, hochdrehender, als Innenläufer ausgeführter Gleichstrommotor ist.

19. Antrieb nach einem der vorhergehenden Ansprüche, mit einer Ansteuereinheit (60) für den Antriebsmotor (44), die so programmiert ist, daß sie den Antriebsmotor (44) so ansteuert, daß dieser vor Erreichen der angehobenen Stellung die beschleunigte Motorhaube (14) wieder abbremst.

## Claims

1. A drive for a hood (10) on a vehicle, in particular an engine hood, which is movable between a closed position and a lifted position, the drive comprising a drive unit (14) which is effective between the vehicle body and the hood and has an electric drive motor (44) abruptly moving the hood (10) into the lifted position in the case of an accident,
**characterized in that** the drive unit (14) has a traveling stop located in the force flow path between the drive motor (44) and the hood (10).

2. The drive according to claim 1, **characterized in that** the drive unit (14) is designed such that the hood (10) remains in the closed position as long as the traveling stop is effective.

3. The drive according to any of claims 1 and 2, **characterized in that** the traveling stop is released by a rotation caused by the drive motor (44).

4. The drive according to claim 3, **characterized in that** at the start of its driving motion, the drive motor (44) at first releases the traveling stop and then moves the hood (10).

5. The drive according to any of the preceding claims, **characterized in that** the traveling stop includes a locking pawl (38).

6. The drive according to claim 5, **characterized in that** the traveling stop includes first and second locking discs (34, 36), which are coupled with each other and which can be rotated with respect to each other by a predetermined angle against a restoring force.

7. The drive according to claim 6, **characterized in that** the first locking disc (34) has a stop (50) against which the locking pawl (38) rests when the traveling stop is active.

8. The drive according to claim 7, **characterized in that** the second locking disc (36) has a slope (54) which cooperates with the locking pawl (38) in such a way that the locking pawl (38) is released from the stop (50) on the first locking disc (34) when the locking discs are rotated with respect to each other.

9. The drive according to claim 8, **characterized in that** the second locking disc (36) can be rotated by means of the drive motor (44).

10. The drive according to any of the preceding claims, **characterized in that** the drive comprises an energy storing device (12) which in the closed position biases the hood (10) in the lifting direction and which is a component that is separate from the drive unit (14).

11. The drive according to claim 10, **characterized in that** in the closed position the traveling stop (34, 36, 38) counteracts the energy storing device (12).

12. The drive according to claim 10 or 11, **characterized in that** the drive motor (44) is adapted to move the hood (10) from the lifted position into the closed position, the drive motor (44) counteracting the energy storing device (12) during such movement.

13. The drive according to any of the preceding claims, in which the hood (10) can be lifted by the drive unit (14) into a position in which it is lifted farther than in the lifted position.

14. The drive according to any of the preceding claims, in which the drive motor (44) is coupled to a reduction gear and forms the drive unit (14) therewith.

15. The drive according to claim 14, **characterized in that** a crank mechanism (16) is provided, the output side (20) of which is coupled to the hood (10) and the input side (18) of which is coupled to the drive motor (44) via the reduction gear.

16. The drive according to claim 15, **characterized in that** a crank arm (18, 20) of the crank mechanism (16) can be swiveled into a third rotary position which corresponds to a maintenance position, the swiveling angle between the first and the third rotary position amounting to approximately 180°.

17. The drive according to any of claims 14 to 16, **characterized in that** the reduction gear is of a multi-stage configuration, the traveling stop (34, 36, 38) engaging between two stages of the reduction gear.

18. The drive according to any of the preceding claims, **characterized in that** the drive motor (44) is a brushless high-speed DC motor configured as an internal rotor.

19. The drive according to any of the preceding claims, comprising a control unit (60) for the drive motor (44), the control unit being programmed such that it drives the drive motor (44) in such a way that the latter reduces the speed of the accelerated engine hood (14) again before it reaches the lifted position.

## Revendications

1. Entraînement pour un capot (10), en particulier pour un capot de véhicule, mobile entre une position de fermeture et une position soulevée, comportant une unité d'entraînement (14) agissant entre la carrosserie de véhicule et le capot, laquelle présente un moteur d'entraînement (44) électrique qui, en cas d'accident, déplace brusquement le capot (10) jusque dans la position soulevée,
**caractérisé en ce que** l'unité d'entraînement (14) présente un blocage de course dans la voie de flux de force entre le moteur d'entraînement (44) et le capot (10).

2. Entraînement selon la revendication 1, **caractérisé en ce que** l'unité d'entraînement (14) est conçue de telle sorte que le capot (10) reste dans la position de fermeture tant que le blocage de course agit.

3. Entraînement selon l'une des revendications 1 et 2, **caractérisé en ce que** le blocage de course est relâché par une rotation provoquée par le moteur d'entraînement (44).

4. Entraînement selon la revendication 3, **caractérisé en ce qu'**au début de son mouvement d'entraînement, le moteur d'entraînement (44) relâche tout d'abord le blocage de course et déplace ensuite le capot (10).

5. Entraînement selon l'une des revendications précédentes, **caractérisé en ce que** le blocage de course comporte un cliquet d'arrêt (38).

6. Entraînement selon la revendication 5, **caractérisé en ce que** le blocage de course comporte un premier disque de blocage (34) et un deuxième disque de blocage (36) qui sont accouplés l'un à l'autre et qui peuvent être tournés l'un par rapport à l'autre d'un angle prédéterminé à l'encontre d'une force de rappel.

7. Entraînement selon la revendication 6, **caractérisé en ce que** le premier disque de blocage (34) présente une butée (50) contre laquelle le cliquet d'arrêt (38) est en appui lorsque le blocage de course est actif.

8. Entraînement selon la revendication 7, **caractérisé en ce que** le deuxième disque de blocage (36) présente une rampe (54) qui coopère avec le cliquet d'arrêt (38) de telle sorte que le cliquet d'arrêt (38) est libéré hors de la butée (50) sur le premier disque de blocage (34) lorsque les disques de blocage sont tournés l'un contre l'autre.

9. Entraînement selon la revendication 8, **caractérisé en ce que** le deuxième disque de blocage (36) peut être tourné par l'intermédiaire du moteur d'entraînement (44).

10. Entraînement selon l'une des revendications précédentes, **caractérisé en ce que** l'entraînement présente un accumulateur de force (12) qui, dans la position de fermeture, sollicite le capot (10) en direction de soulèvement et qui est un composant séparé de l'unité d'entraînement (14).

11. Entraînement selon la revendication 10, **caractérisé en ce que** dans la position de fermeture, le blocage de course (34, 36, 38) s'oppose à l'accumulateur de force (12).

12. Entraînement selon la revendication 10 ou 11, **caractérisé en ce que** le moteur d'entraînement (44) peut déplacer le capot (10) depuis la position soulevée jusque dans la position de fermeture, le moteur d'entraînement (44) s'opposant à l'accumulateur de force (12) lors de ce mouvement.

13. Entraînement selon l'une des revendications précédentes, dans lequel le capot (10) peut être soulevé par l'unité d'entraînement (14) dans une position dans laquelle il peut être soulevé plus loin que dans la position soulevée.

14. Entraînement selon l'une des revendications précédentes, dans lequel le moteur d'entraînement (44) est accouplé à un démultiplicateur et forme avec celui-ci l'unité d'entraînement (14).

15. Entraînement selon la revendication 14, **caractérisé en ce qu'**il est prévu une transmission à manivelle (16) dont le côté sortie (20) est accouplé au capot (10) et dont le côté admission (18) est accouplé au moteur d'entraînement (44) via le démultiplicateur.

16. Entraînement selon la revendication 15, **caractérisé en ce qu'**un bras de manivelle (18, 20) de la transmission à manivelle (17) peut être pivoté dans une troisième position de rotation correspondant à une position de maintenance, l'angle de pivotement entre les première et deuxième positions de rotation étant d'environ 180°.

17. Entraînement selon l'une des revendications 14 à 16, **caractérisé en ce que** la transmission à manivelle est réalisée à plusieurs étages, le blocage de course (34, 36, 38) s'engageant entre deux étages du démultiplicateur.

18. Entraînement selon l'une des revendications précédentes, **caractérisé en ce que** le moteur d'entraînement (44) est un moteur à courant continu sans brosse, tournant à plein régime et réalisé sous forme de rotor intérieur.

19. Entraînement selon l'une des revendications précédentes, comportant une unité de pilotage (60) pour le moteur d'entraînement (44), qui est programmée de manière à piloter le moteur d'entraînement (44) de telle sorte qu'avant d'atteindre la position soulevée, celui-ci freine de nouveau le capot (14) accéléré.
